# EUROPÄISCHE PATENTSCHRIFT

(11) **EP 4 255 606 B1**
(45) Veröffentlichungstag und Bekanntmachung des Hinweises auf die Patenterteilung: **19.03.2025**
(21) Anmeldenummer: 22814521.5
(22) Anmeldetag: 14.11.2022
(51) Int. Cl.: B01D 46/00, B01D 46/52, B01D 46/44

(54) **FILTERMODUL, ANLAGE ZUR FILTERUNG VON STÄUBEN UND VERFAHREN ZUR ABTRENNUNG VON STÄUBEN AUS EINEM GASSTROM**
FILTER MODULE, SYSTEM FOR FILTERING DUST AND METHOD FOR SEPARATING DUST FROM A GAS FLOW
MODULE DE FILTRAGE, INSTALLATION DE FILTRAGE DE POUSSIÈRES ET PROCÉDÉ POUR RETIRER LES POUSSIÈRES D'UN FLUX DE GAZ

(30) Priorität: 15.11.2021 DE 102021129671
(43) Veröffentlichungstag der Anmeldung: 11.10.2023
(73) Patentinhaber: Rexotec AG, 91282 Betzenstein (DE)
(72) Erfinder: REITINGER, Peter, 91282 Betzenstein (DE)
(74) Vertreter: Völger, Karl Wolfgang
(86) Internationale Anmeldenummer: PCT/IB2022/060917
(87) Internationale Veröffentlichungsnummer: WO 2023/084477

(56) Entgegenhaltungen:
- WO-A1-03/059490
- CN-A- 111 841 199
- CN-A- 113 599 929
- DE-B4- 102016 008 204
- KR-A- 20150 139 664
- US-A- 2 135 863
- US-A1- 2015 013 287
- US-A1- 2017 095 762

## Beschreibung

Die Erfindung betrifft ein Filtermodul, eine Anlage zur Filterung von Stäuben enthaltend das Filtermodul und ein Verfahren zur Abtrennung von Stäuben aus einem Gasstrom unter Verwendung der Anlage. Filtermodul und Anlage sind insbesondere explosionsfest ausgelegt, so dass eine explosionsgeschützte Abtrennung von Stäuben ermöglicht wird.

Filtermodule und Filteranlagen für unterschiedliche Medien sind aus dem Stand der Technik grundsätzlich bekannt. So beschreibt beispielsweise WO 2019/063335 A1 eine gattungsgemäße Filtereinrichtung, die einen Filtermediumkörper umfasst, der zwischen zwei Gehäuseteilen festgeklemmt ist. Dieser Filtermediumkörper wird dichtungsfrei zwischen den beiden Gehäuseteilen festgeklemmt, das heißt, es kann nach dieser Veröffentlichung auf eine randseitige Abdichtung verzichtet werden. Die Zwischenräume zwischen den Falten des Filtermediumkörpers sind an der Längsseite quer zu den Falten ohne Filterfunktion fluiddurchlässig. Diese gattungsgemäße Filtereinrichtung ist insbesondere zur Flüssigkeitsfiltration, beispielsweise zur Ölfiltration, geeignet. Sie kann jedoch aufgrund ihrer mechanischen Auslegung nicht für die Filterung von Stäuben, konkret von explosionsfähigen Stäuben, eingesetzt werden, da weder die Befestigung des Filtermediumkörpers noch die stromabwärtige Seite der Filtereinrichtung für höhere Drücke, vor allem für Explosionsdrücke, ausgelegt sind.

CN 111 841 199 A gehört allgemein zum technischen Gebiet der Luftreinigung und bezieht sich insbesondere auf eine Befestigungsvorrichtung, ein Sieb und eine Luftreinigungsvorrichtung. Die Befestigungsvorrichtung umfasst einen ersten Rahmenkörper und einen zweiten Rahmenkörper, die zum Einspannen von Filterpapier verwendet werden, wobei der erste Rahmenkörper mit einem ersten Kammrahmen versehen ist Kammrahmen versehen ist; der zweite Rahmenkörper mit einem zweiten Kammrahmen versehen ist; der erste Kammrahmen und der zweite Kammrahmen jeweils mit Kammzähnen versehen sind mit Kammzähnen versehen sind, die sich in Biegespalten des Filterpapiers erstrecken. Die Kammzähne garantieren die Steifigkeit des Filtersiebs und den Abstand zwischen jeweils zwei benachbarten Biegungen des Filterpapiers. Die Fixiervorrichtung ersetzt das im Stand der Technik übliche Verkleben und Versiegeln des Filterpapiers die Stabilität und Hochtemperaturbeständigkeit des Filtersiebs, reduziert den Stabilität und Hochtemperaturbeständigkeit des Filtersiebs, reduziert die Bearbeitungsvorgänge und Materialbedarf des Filtersiebs, verbessert die Montageeffizienz des des Filtersiebs und spart bei der Bearbeitung des Filtersiebs Verbrauchsmaterial.

Aus US 2015/0013287 A1 ist ein Filterrahmen zum Halten eines Filters bekannt, der mit einer Vielzahl von Falten versehen ist, um abwechselnd Rippen und Mulden zu bilden, mit: einem ersten Rahmenabschnitt mit einem ersten Halteabschnitt, der eine Seite hat, die einer ersten Seite des Filters entspricht, zum Halten des Filters; einem Positionierungsabschnitt, der an dem ersten Halteabschnitt vorgesehen ist, zum Bestimmen einer Position des Filters; und einem zweiten Rahmenabschnitt mit einem zweiten Halteabschnitt zum Halten des Filters durch Einklemmen des Filters zwischen dem ersten und dem zweiten Halteabschnitt. Der zweite Halteabschnitt ist so vorgesehen, dass er in der Lage ist, dem ersten Halteabschnitt über den Filter gegenüberzustehen, und hat eine Seite, die einer zweiten Seite des Filters entspricht.

WO 2003/059490 A1 beschreibt einen Filter mit austauschbarem Filterpapier für einen Staubsammler. Der Filter umfasst kastenförmige obere und untere Filter, die jeweils ein Filterkombinationsmittel und ein Filterpapierpositionierungsmittel sowie ein Filterpapierbefestigungsmittel zum Befestigen von Filterpapier an dem Filterpapierpositionierungsmittel des oberen Filters und des unteren Filters, die durch das Filterkombinationsmittel miteinander kombiniert sind, aufweisen.

In US 2017/0095762 A1 wird ein System mit einem Sensor offenbart, der mit einem Filter eines bestimmten Typs verbunden ist. Der Sensor misst den Druckabfall über den Filter und kommuniziert mit dem Steuergerät. Ein Luftbehandlungsgerät drückt Luft durch den Filter und kommuniziert mit einem Steuergerät. Das Steuergerät umfasst eine Schnittstellenverbindung, einen Speicher und einen Mikroprozessor. Die Schnittstellenverbindung empfängt den Luftdurchsatz des Luftbehandlungsgeräts und den Druckabfall über den Filter. Der Speicher speichert die Beziehung zwischen Druckabfall und Luftdurchsatz für einen Filter desselben Filtertyps, wenn der Filter sauber ist und wenn der Filter erschöpft ist. Der Speicher speichert auch die Beziehung zwischen Druckabfall und Lebensdauer eines Filters des Filtertyps. Der Prozessor bestimmt die verbleibende Lebensdauer des Filters anhand der empfangenen und gespeicherten Informationen. Das Display empfängt Informationen von der Steuerung und zeigt diese an.

KR 10 2015 0139664 A beschreibt einen Luftreiniger gemäß einer Ausführungsform der einen Speicher umfasst, der ein Durchflussraten-Druckdifferenz-Korrelationsdiagramm für Betriebsbedingungen mehrerer Filter speichert; einen Differenzdrucksensor, der die Druckdifferenz eines Innenfilters misst; einen Durchflusssensor, der die Durchflussrate der in den Innenfilter strömenden Luft misst; und einen Filterwechselperioden-Verwaltungsteil, der ein Diagramm aus den Durchflussraten-Druckdifferenz-Korrelationsdiagrammen mehrerer in dem Speicher gespeicherter Filter auf der Grundlage der anfänglichen Druckdifferenz und Durchflussrate, die in einem anfänglichen Installationsschritt gemessen werden, auswählt und die Wechselperiode des Innenfilters danach bestimmt, ob die danach periodisch gemessene Druckdifferenz und Durchflussrate mit dem ausgewählten Diagramm übereinstimmen oder nicht.

DE 10 2016 008 204 B4 Erfindung betrifft eine Explosionsschutzvorrichtung zur explosionsmäßigen Entkopplung zweier Anlagenteile, die mittels einer Rohrleitung miteinander verbunden sind, in der explosive Stäube oder Gase in einer Strömungsrichtung gefördert werden, wobei innerhalb der Rohrleitung ein Rohrköper angeordnet ist, wobei der Rohrkörper eine Einlassöffnung und eine axial beabstandete Auslassöffnung mit mindestens einem dazwischen angeordneten Schließorgan enthält. Die Explosionsschutzvorrichtung ist dadurch gekennzeichnet, dass zwischen der Einlass- und Auslassöffnung mindestens zwei axial beabstandete unterschiedlich ausgebildete Schließorgane vorgesehen und diese abwechselnd nacheinander im Rohrkörper angeordnet sind, wobei jedes Schließorgan zwei schräg in den Rohrkörper ragende Biegeplatten enthält, die in Strömungsrichtung den Durchströmquerschnitt zunehmend verengen, wobei ein radiales Schließorgan zwei Biegeplatten an gegenüberliegenden Innenwänden des Rohrkörpers enthält und ein zentrales Schließorgan zwei im Zentrum des Rohrkörpers angeordnete und v-förmig miteinander verbundene Biegeplaten enthält, wobei die Biegeplatten so elastisch oder plastisch verbiegbar sind, dass diese bei einem Explosionsdruck den Durchströmquerschnitt des Rohrkörpers in Gegenrichtung zur Strömungsrichtung (10) verschließen.

CN 113 599 929 A offenbart eine feuer- und explosionsgeschützte Entstaubungsvorrichtung und bezieht sich auf das technische Gebiet der Entstaubung, wobei die Vorrichtung einen Maschinenkörper und einen unterhalb des Maschinenkörpers angeordneten Entstaubungstrichter umfasst, eine Filterpatrone im Maschinenkörper angeordnet ist, die Filterpatrone eine Montageplatte, einen Patronenkern und ein Filtertuch umfasst, eine erste Befestigungsplatte fest im Maschinenkörper angeordnet ist, und ein Montagerahmen fest an der Bodenwand der ersten Befestigungsplatte angeordnet ist; eine erste Befestigungsplatte fest im Maschinenkörper angeordnet ist und ein Montagerahmen fest an der Bodenwand der ersten Befestigungsplatte angeordnet ist; Montagenuten, in die die Befestigungsplatten eingesetzt werden können, in den beiden Seiten des Montagerahmens ausgebildet sind und Ansatzplatten fest an den Böden der Montagenuten angeordnet sind; eine Begrenzungsplatte an jeder Ansatzplatte angelenkt ist, ein vorstehender Teil, der zum Anstoßen an die Befestigungsplatte verwendet wird, an der Oberseite der Begrenzungsplatte angeordnet ist und eine Begrenzungsbaugruppe, die zum Begrenzen der Position der Begrenzungsplatte verwendet wird, um zu ermöglichen, dass der vorstehende Teil und die Befestigungsplatte in einem anstoßenden Zustand gehalten werden können, an der Ansatzplatte angeordnet ist. Wenn das Filtertuch oder die gesamte Filterpatrone ausgetauscht werden muss, wird die Begrenzung der Position der Begrenzungsplatten durch die Begrenzungsbaugruppe aufgehoben, so dass der vorstehende Teil auf den Begrenzungsplatten von der Anlage mit den Montageplatten getrennt wird, dann werden die Montageplatten aus den Montagenuten herausbewegt, die gesamte Filterpatrone kann herausgenommen werden, die Bedienung ist einfach, und die Filterpatrone ist bequem herauszunehmen und zu ersetzen.

Obwohl heute eine große Bandbreite unterschiedlicher Systeme zur Filterung verschiedenartiger Stäube verfügbar ist, gibt es nach Aussage vieler Anlagenbetreiber keine sichere und sowohl technisch als auch wirtschaftlich überzeugende Lösung zur Trockenabscheidung hochexplosiver (über Staubklasse St 2), heißer Stäube, wie sie beispielsweise beim Strahlen von Metallteilen anfallen. Hierunter fallen neben metallischen Stäuben und organischen Stäuben insbesondere Leichtmetallstäube, die bei einer Explosion Temperaturen von bis zu 3.000 °C erzeugen können und eine erheblich heftigere Explosionswirkung als bei normalen metallischen oder bei organischen Stäuben zeigen.

Die explosionstechnischen Schutzkonzepte für Anlagen zur Filterung explosionsfähiger Stäube sehen heute in der Regel so aus, dass an eine Filteranlage eine Explosionsdruckentlastungseinrichtung und eine explosionstechnische Entkopplung montiert werden. Diese Geräte müssen für jede Filteranlage und jede Staubart individuell ausgelegt und überdies aufeinander abgestimmt werden. Hier besteht eine nicht zu unterschätzende Gefahr von Fehleinschätzungen. Die allgemein geltenden Auslegungsgrundlagen sind, insbesondere was Metallstäube angeht, unzureichend und liefern zum Teil falsche Ergebnisse, was fallweise sogar zu einer Risikoerhöhung führen kann.

Stäube werden je nach Materialbeschaffenheit hinsichtlich ihrer Explosionsgefährlichkeit in drei Staubklassen (St 1 bis St 3) eingeteilt. Für Metallstäube der Staubklasse St 1 (K_{St}-Wert bis 200 bar*m/s) gibt es zugelassene Druckentlastungseinrichtungen, die im Rahmen eines Schutzkonzepts einsetzbar sind. Für Metallstäube der Klasse St 2 (K_{St}-Wert bis 300 bar*m/s) gibt es diese schon nicht mehr. Schutzeinrichtungen für St 3-Metallstäube (K_{St}-Wert über 300 bar*m/s) gelten nach dem derzeitigen Stand der Technik als unrealisierbar, da die Rohgasvolumina der Filtergehäuse zu groß sind. Dabei kommen Stäube der Klassen St 2 und St 3 in industriellen Prozessen immer häufiger vor.

Der K_{St}-Wert ist eine staub- und prüfverfahrensspezifische Kenngröße, die sich aus der Volumenabhängigkeit des maximalen zeitlichen Druckanstiegs (kubisches Gesetz) errechnet. Sie ist zahlenmäßig gleich dem Wert für den maximalen zeitlichen Druckanstieg im 1-Meter-Behälter. Die Prüfbedingungen sind in den Richtlinien VDI 3673 Blatt 1 und VDI 2263 Blatt 1 sowie in ISO 6184-1 festgelegt.

Die heutige Konzeption industrieller Entstaubungs- oder Filteranlagen (Absaugleistungen von 2.000 m³/h bis 9.000 m³/h), die zunehmend in geschlossenen Hallen direkt in der Nähe der Fertigungsprozesse positioniert werden, bringt in mehrfacher Hinsicht Probleme mit sich:
- Das relativ hohe Rohgasvolumen hat großen Einfluss auf die explosionstechnische Auslegung der Filter. Mit dem Rohgasvolumen steigt die Größe der Staubwolke, die sich in der Anlage bilden kann, und damit die Heftigkeit einer potenziellen Explosion.
- Der Schalldruckpegel von über 75 dB (A) während des Betriebs kann nur mit erheblichem Zusatzaufwand (z. B. Schallschutzkabinen) auf ein gesundheitlich unbedenkliches, zulässiges Maß reduziert werden.
- Wegen ihrer Größe benötigen die Filteranlagen relativ viel Platz.
- Die Abreinigung der Filterpatronen erfolgt oft über Druckluftimpulse. Die Druckschläge erzeugen ebenfalls einen hohen Schalldruckpegel von über 70 dB (A).
- Die erforderlichen leistungsstarken Antriebsventilatoren verbrauchen viel Energie.
- In Ermangelung geeigneter Trockenfilter für hochexplosive Stäube werden für solche Materialien oft Nassentstauber eingesetzt, die unter Umweltschutzgesichtspunkten problematisch sind.

Es besteht daher ein Bedarf nach einem System, das die vorstehend geschilderten Nachteile überwindet. Insbesondere ist durch Anfragen und anschließende Gespräche mit Automobil-, Batterie- und Strahlanlagenherstellern ermittelt worden, dass es einen Bedarf für Systeme zur Filterung hochexplosiver, brennbarer Stäube gibt, für den die aktuell verfügbaren Staubabscheider keine wirklich befriedigende Lösung darstellen.

Der Erfindung liegt deshalb die Aufgabe zugrunde, ein neuartiges Filtermodul und eine neuartige Anlage zur Filterung von Stäuben bereitzustellen sowie ein Verfahren zur Abtrennung von Stäuben aus einem Gasstrom anzugeben, bei welchen der Verlust an effektiver Filterfläche im Betrieb vermieden wird, während gleichzeitig das Rohgasvolumen zur explosionstechnischen Risikominimierung deutlich verringert wird.

Diese Aufgabe wird erfindungsgemäß in einem ersten Aspekt der vorliegenden Erfindung durch ein Filtermodul (1) für Stäube gelöst, umfassend
- eine erste Anordnung von mindestens zwei kammartigen Grundelementen (101a, 101b), die in einem Grundrahmen (103) aufgenommen sind,
- eine zweite Anordnung von mindestens zwei kammartigen Fixierelementen (105a, 105b), die in einem Fixierrahmen (107) aufgenommen sind,

wobei die kammartigen Fixierelemente (105a, 105b) geometrisch komplementär zu den kammartigen Grundelementen (101a, 101b) ausgebildet sind,
   - eine Befestigungseinrichtung (109) zum reversiblen Verbinden des Grundrahmens (103) mit dem Fixierrahmen (107) und
   - ein Filtermaterial (111), das eine Faltung aufweist,
wobei das Filtermaterial (111) über die erste Anordnung von kammartigen Grundelementen (101a, 101b) gelegt und mit der zweiten Anordnung von kammartigen Fixierelementen (105a, 105b) fixiert ist
wobei der Fixierrahmen (107) eine Gitterstruktur mit Stegen (1071) und Schlitzen (1073) aufweist, wobei die Stege (1071) auf einer Reingasseite jeweils die Enden der Faltung des Filtermaterials (111) stützen, so dass das Filtermodul (1) explosionsfest ausgeführt ist.

Die mit dem erfindungsgemäßen Filtermodul (1) zu filternden Stäube sind insbesondere explosionsfähige Stäube, ganz besonders Metallstäube und organische Stäube, insbesondere Leichtmetallstäube.

Der Begriff "kammartige Grundelemente" bezeichnet, ebenso wie der Begriff "kammartige Fixierelemente", im Sinne der vorliegenden Erfindung jeweils ein Bauteil, das in der Art eines Kammes eine Zahnung bzw. Zinken aufweist, die gleichmäßig über die Länge ausgebildet und alle in der gleichen Richtung geöffnet sind. Diese können in der Höhe, dem Abstand (Teilung) und der Neigung verändert werden, damit beliebige Filtermaterialien entsprechend der jeweiligen Filteraufgabe eingesetzt werden können.

In der erfindungsgemäßen "Anordnung" sind zwei oder mehr kammartige Grundelemente (101a, 101b), bzw. kammartigen Fixierelemente (105a, 105b) nebeneinander beabstandet angeordnet, wobei die Zahnung innerhalb der Anordnung gegeneinander fluchtend ausgerichtet ist. Die Anordnung wird jeweils in dem Grundrahmen (103) bzw. in dem Fixierrahmen (107) aufgenommen, so dass die die Bauteile nicht gegeneinander verschieben können.

Zwischen die kammartigen Grundelemente (101a, 101b) und die kammartigen Fixierelemente (105a, 105b) wird das eine Faltung aufweisende Filtermaterial (111) eingelegt und fixiert.

Erfindungsgemäß wesentlich ist, dass die kammartigen Fixierelemente (105a, 105b) geometrisch komplementär zu den kammartigen Grundelementen (101a, 101b) ausgebildet sind, d.h., die kammartigen Fixierelemente (105a, 105b) können in die kammartigen Grundelemente (101a, 101b) eingesteckt werden, da die jeweiligen Zahnungen identisch sind.

Die Befestigungseinrichtung (109) dient erfindungsgemäß dazu, den Fixierrahmen (107) auf dem Grundrahmen (103) zu befestigen, bspw. durch Verschrauben, so dass sich das Filtermodul als kompakte Baueinheit ergibt.

Das erfindungsgemäße Filtermodul (1) weist zunächst den Vorteil auf, dass durch die Anordnungen jede Falte des Filtermaterials (111) mechanisch fest eingespannt ist, was eine Materialermüdung verhindert. Durch das fixierende Klemmen sind bspw. Kleberaupen, wie sie aus dem Stand der Technik bekannt sind, für die Stabilisierung des Filtermaterials (111) bzw. eines ganzen Filterelements nicht mehr erforderlich. Deshalb lassen sich grundsätzlich alle, auch beschichtete, Filtermaterialien einsetzen.

Ein weiterer wesentlicher Vorteil des erfindungsgemäßen Filtermoduls (1) mit fest eingespanntem Filtermaterial (111) besteht gegenüber den vorhandenen Systemen jedoch darin, dass sich dessen Falten beim Durchströmen mit einem zu reinigenden Gasstrom nicht mehr zusammendrücken können und somit der Verlust eines großen Teils der Filterfläche vermieden wird. Die freie Durchströmbarkeit des Filtermaterials (111) und damit des erfindungsgemäßen Filtermoduls (1) bleibt nahezu uneingeschränkt erhalten.

Zudem wird ein Walken des Filtermaterials (111), das zu Filterbrüchen führen könnte, komplett ausgeschlossen.

Das bedeutet ferner einen signifikant geringeren Energiebedarf für den Antrieb (z.B. Ventilator), der den Gasstrom erzeugt. Versuche und Berechnungen haben gezeigt, dass die gleiche Absaugleistung, für die heutige Systeme 15 kW benötigen, mit dem erfindungsgemäßen Filtermodul (1) mit lediglich 7 kW erreichbar ist. Das schont die Umwelt und reduziert die Betriebskosten erheblich.

Durch die Reduzierung der Druckverluste in den erfindungsgemäßen Filtermodulen (1) wird der Leistungsbedarf der Ventilatoren nahezu halbiert, die Betriebskosten werden gesenkt, und damit wird dem Umweltaspekt (CO₂-Ausstoß reduzieren) Rechnung getragen.

Das erfindungsgemäße Filtermodul (1) ist daher für alle denkbaren Anwendungsbereiche auslegbar und universell einsetzbar.

Mit "Reingasseite" ist hier die Seite des erfindungsgemäßen Filtermoduls (1) gemeint, an welcher das gereinigte Gas abgezogen wird. Die "Reingasseite" ist gleichzeitig die einer möglichen Staubexplosion abgewandte Seite.

Der Fixierrahmen (107) ist vorzugsweise einstückig mit den kammartigen Fixierelementen (105a, 105b) ausgebildet, d.h. er trägt diese kammartigen Fixierelemente (105a, 105b) an seiner dem Inneren des erfindungsgemäßen Filtermoduls (1) zugewandten Seite.

Im Falle einer Staubexplosion auf der Rohgasseite (der dem Zufuhrkanal (5) zugewandten Seite gegenüber der Reingasseite), breitet sich der Druck im Wesentlichen durch das erfindungsgemäße Filtermodul (1) hindurch aus. Dadurch kommt es zu einer gewissen Verformung des Fixierrahmens (107) in Richtung der Reingasseite. Durch diese Verformung (eine Art "Ausbeulen") werden die kammartigen Fixierelemente (105a, 105b) in der Weise mit verformt, dass sich die Spitzen zueinander bewegen, wodurch die Klemmung des Filtermaterials (111) auf den kammartigen Grundelementen (101a, 101b) noch erhöht wird.

Zudem stützen im Falle einer Staubexplosion auf der Rohgasseite die Stege (1071) die Spitzen der Faltung des Filtermaterials (111), also genau den Bereich, welcher durch den Explosionsdruck besonders belastet wird. Es wird daher vermieden, dass das Filtermaterial (111) an diesen Spitzen der Faltung ausreißt und die abgereinigten Stäube sich auf die Reingasseite ausbreiten.

Die erfindungsgemäße Konstruktion ermöglicht in dem Fall, in dem eine möglichst hohe Stabilität und eine möglichst starke Klemmung notwendig ist, diese durch rein mechanische Mittel.

In einer Ausführungsform der Erfindung beträgt der Abstand zwischen den mindestens zwei kammartigen Grundelementen (101a, 101b) mindestens 30 mm bis 50 mm, bevorzugt 40 mm, und der Abstand zwischen den mindestens zwei kammartigen Fixierelementen (105a, 105b) mindestens 30 mm bis 50 mm, bevorzugt 40 mm. Hierdurch soll sichergestellt werden, dass das eingespannte Filtermaterial (111) sich zwischen den kammartigen Elementen (101a, 101b, 105a, 105b) nicht anlegt oder Taschen bildet.

Um eine ausreichende Fixierung des Filtermaterials (111) zu erreichen, ist das Filtermaterial (111) für jede Falte auf einer Länge von mindestens 40 mm, bevorzugt mindestens 50 mm (die konkrete Länge hängt von der Höhe der Falten ab), zwischen einem der kammartigen Grundelemente (101a, 101b) und einem der korrespondierenden kammartigen Fixierelemente (105a, 105b) fixiert. Die Länge der Fixierung hängt zu einem gewissen Maße von der Größe der kammartigen Elemente (101a, 101b, 105a, 105b) ab, es können daher auch größere Längen vorkommen.

In einer Weiterbildung wird das Filtermaterial (111) an der Spitze jeder Falte auf zumindest einer Seite durch eines der kammartigen Grundelemente (101a, 101b) oder durch eines der kammartigen Fixierelemente (105a, 105b) gestützt. Damit kann eine Art Sackbildung verhindert werden, bei der sich zu filterndes Material in der stromzugewandten Seite ansammelt und das Filtermaterial (111) ausbeult.

Eine andere Ausführungsform sieht vor, dass der Fixierrahmen (107) Schlitze (1073) aufweist, deren Länge dem Abstand zwischen den mindestens zwei kammartigen Grundelementen (101a, 101b) (bzw. zwischen dem mindestens zwei kammartigen Fixierelementen (105a, 105b)) entspricht und deren Abstand dem Abstand der Faltung des Filtermaterials (111), entspricht. Zwischen den Schlitzen (1073) sind die vorstehend genannten Stege (1071) vorgesehen. Damit wird sichergestellt, dass durch die gezielte Spülluft ein Abreinigungsgrad von nahezu 100 % in jeder Falte gegeben ist, was Versuchsreihen bereits bestätigt haben.

Die Breite der Schlitze entspricht bevorzugt der Öffnung der Faltung abzüglich etwa 3 mm. Dieses Maß hat einen fertigungstechnischen Hintergrund (technische Machbarkeit).

Eine Weiterbildung des erfindungsgemäßen Filtermoduls (1) sieht vor, dass durch das Fixieren des Filtermaterials (111) zwischen der ersten Anordnung von kammartigen Grundelementen (101a, 101b) und der zweiten Anordnung von kammartigen Fixierelementen (105a, 105b) zwischen zwei benachbarten Anordnungen zusammen mit der Gitterstruktur des Fixierrahmens (107) einzelne Filterkammern (113) gebildet werden.

Diese Filterkammern (113) werden an zwei gegenüberliegenden Seiten von dem Material der kammartigen Grundelemente (101a, 101b) bzw. der kammartigen Fixierelemente (105a, 105b) und an den beiden anderen Seiten durch das gefaltete Filtermaterial (111) begrenzt, das erfindungsgemäß eingespannt ist. Auf diese Weise ist jede der Filterkammern (113) in sich stabil, wobei das Filtermaterial (111) sich nur unwesentlich verformen lässt.

Im regulären Einsatz des erfindungsgemäßen Filtermoduls (1) werden auf der Rohgasseite die Stäube am Filtermaterial (111) aufgenommen, wobei sich durch die Stabilität der Filterkammern (113) keine Sackbildung ergeben kann, wie das bei herkömmlichen Filtern der Fall ist. Wenn das erfindungsgemäße Filtermodul (1) abgereinigt wird, indem von der Reingasseite ein Luftstrom eingeblasen wird, um die aufgefangenen Stäube zu entfernen, bleibt das Filtermaterial (111) stabil, es wird eine maximale Durchströmung sichergestellt, welche eine optimale Abreinigung ermöglicht.

Im Falle einer Staubexplosion auf der Rohgasseite bleiben die Filterkammern (113) ebenfalls stabil und sorgen für eine maximale Durchströmung, so dass der Explosionsdruck sehr rasch und auf der maximalen Fläche entweichen kann.

Das Filtermaterial (111) kann bevorzugt als eine Art Filterblock mit fertiger Faltung und randseitiger Dichtung bereitgestellt sein, so dass das Einfügen in das und das Entnehmen aus dem erfindungsgemäßen Filtermodul (1) in wenigen Handgriffen erfolgen kann. Die Faltung des Filtermaterials (111) ist dabei auf die kammartigen Grundelementen (101a, 101b) und die kammartigen Fixierelementen (105a, 105b) optimal abgestimmt.

Wenn in der Beschreibung des erfindungsgemäßen Filtermoduls (1) weitere Vorrichtungsmerkmale oder Verfahrensmerkmale genannt werden, so beziehen sich diese insbesondere auf die erfindungsgemäße Anlage (100) und auf das erfindungsgemäße Verfahren. Ebenso beziehen sich gegenständliche Merkmale, die in der Beschreibung des erfindungsgemäßen Verfahrens angeführt werden, auf das erfindungsgemäße Filtermodul (1) und die erfindungsgemäße Anlage (100).

Die vorstehend genannte Aufgabe der Erfindung wird in einem zweiten Aspekt durch eine Anlage (100) zur Filterung von Stäuben gelöst, umfassend
- das erfindungsgemäße Filtermodul (1), wie es vorstehend beschrieben wurde,
- ein Gehäuse (3), das eine Aufnahme für das Filtermodul (1) aufweist,
- einen stromaufwärts der Aufnahme für das Filtermodul (1) angeordneten Zufuhrkanal (5),
- eine in dem Gehäuse (3) angeordnete Ansaugeinrichtung (7), die in Strömungsverbindung mit dem Filtermodul (1) steht,
- einen stromabwärts der Ansaugeinrichtung (7) angeordneten Abfuhrkanal (9),
- einen Drucksensor, der zwischen dem Filtermodul (1) und der Ansaugeinrichtung (7) angeordnet ist, und
- einen Schaltkasten (13), der elektrisch zumindest mit der Ansaugeinrichtung (7) und dem Drucksensor verbunden ist.

Die erfindungsgemäße Anlage (100) ist insbesondere eine explosionsgeschützte Anlage zur Filterung von explosionsfähigen Stäuben, ganz besonders Metallstäube und organische Stäube, insbesondere Leichtmetallstäube.

Der Zufuhrkanal (5) stromaufwärts des erfindungsgemäßen Filtermoduls (1) ist dazu ausgelegt, den zu reinigenden Gasstrom heranzuführen. Die Ansaugung erfolgt grundsätzlich über eine stromabwärts des erfindungsgemäßen Filtermoduls (1) im oder am Abfuhrkanal (9) angeordnete Ansaugeinrichtung (7) mit entsprechender Auslegung.

Die Aufnahme für das Filtermodul (1) ist vorzugsweise senkrecht angeordnet.

Mit dem erfindungsgemäß vorgesehenen Drucksensor wird der Druckunterschied zwischen der stromaufwärtigen Seite und der stromabwärtigen Seite des erfindungsgemäßen Filtermoduls (1) erfasst, wodurch der Grad des Zusetzens des Filtermaterials (111) bestimmt werden kann.

Bei einer Explosion ist grundsätzlich die Explosionsgeschwindigkeit (d.h. die Reaktionsgeschwindigkeit) von erheblicher Bedeutung. Je schneller eine Explosion abläuft und je größer das Rohgasvolumen einer Filteranlage ist, desto so größer ist das Gasvolumen, das sich pro Zeiteinheit im System bildet, und desto höher steigt der Druck, wenn die Explosionsdruckentlastung nicht schnell genug erfolgt. Nach dem Stand der Technik werden zur Realisierung höherer Luftdurchsatz-Kapazitäten Filteranlagen mit entsprechend größerem Rohgasvolumen eingesetzt. Filteranlagen mit größerem Rohgasvolumen erfordern größere Explosionsdruck-Entlastungsflächen, die durch das Anbringen entsprechend dimensionierter autonomer Schutzsysteme (z.B. flammenlose Explosionsdruckentlastung nach EN 16009) geschaffen werden. Dies führt, sofern technisch überhaupt möglich, zu hohen Mehrkosten. Im Gegensatz dazu bleibt bei der vorliegenden Erfindung das Rohgasvolumen der Filteranlage (100) immer in etwa gleich groß (ca. 0,1 m³), auch wenn sich der Luftdurchsatz verdoppelt oder verdreifacht. Dadurch reduziert sich das gesamte Schadensrisiko bei einer Explosion erheblich.

Die vorliegende Erfindung geht folglich einen anderen Weg, indem die Tatsache berücksichtigt wird, dass der Druckanstieg innerhalb des Systems umso geringer ist, je kleiner einerseits das Rohgasvolumen ist und je ungehinderter andererseits das Gas-Staub-Gemisch durch ein System hindurchströmen, d.h. das Innere der Filteranlage (100) verlassen kann.

Die erfindungsgemäße Anlage (100) weist zu den für das erfindungsgemäße Filtermodul (1) bereits genannten Vorteilen die weiteren Vorteile auf, dass aufgrund der Tatsache, dass das Rohgasvolumen eines erfindungsgemäßen Filtermoduls (1) lediglich etwa 0,1 m³ (bis zu 100 I) beträgt, während das Rohgasvolumen bekannter Filteranlagen mit vergleichbarer Absaugleistung bei ca. 2,5 m³ liegt. Das geringe Volumen bedeutet eine extreme Risikominimierung im Hinblick auf alle explosionstechnischen Fragen.

Aufgrund seiner Bauweise ist die erfindungsgemäße Anlage (100) mit dem erfindungsgemäßen Filtermodul (1) für heiße und hochexplosive Stäube der Klasse St 3 geeignet, es können auch alle weniger explosiven Materialien damit gefiltert werden - fehlerträchtige Auslegungen im Einzelfall sind nicht mehr erforderlich.

Die kompakte Bauweise der erfindungsgemäßen Anlage (100) gewährleistet eine Druckstoßfestigkeit (pred) von mindestens 2 bar (Ü). Diese Faktoren ermöglichen eine gefahrlose Explosionsdruckentlastung mit dem Strömungsverlauf in den Austrittskanal, es werden keine zusätzlichen Entlastungseinrichtungen benötigt.

Die erfindungsgemäße Filteranlage (100) kann frei in einer Halle (z.B. Fertigungshalle) positioniert werden, da keine Abluftverrohrung erforderlich ist. Dies wird durch Einsatz eines Schwebstoff-Filters (HEPA-Filter) erreicht. Deshalb muss keine Frischluft in die Halle geführt werden, daher entsteht kein zusätzlicher Energiebedarf für die Hallenheizung. Durch den Verschlussschieber ist der Brandschutz gegeben, da dieser den Staubwagen luftdicht sowie druckdicht verschließt. Wegen des integrierten Schallschutzes kann die erfindungsgemäße Anlage (100) ohne zusätzlichen Aufwand direkt an die Absaugstellen positioniert werden, wodurch weite Verrohrungswege und damit weitere Strömungsverluste vermieden werden.

Selbst für den Fall einer Staubexplosion in einer erfindungsgemäßen Anlage (100) sind keine Sicherheitsabstände für Personen oder andere Geräte einzuhalten. Die Oberflächentemperatur des Gehäuses (3) der erfindungsgemäßen Anlage (100) erreicht auch im Fall einer Staubexplosion keinen kritischen Wert, der die Umgebung gefährden würde. Im Gegensatz dazu können Explosionsdruckentlastungen nach dem Stand der Technik schnell eine Oberflächentemperatur von 400 °C erreichen, so dass Schutzabstände vorzusehen sind.

In einer Weiterbildung weist die erfindungsgemäße Anlage (100) bei einem Rohgasvolumen von bis zu 0,1 m³ eine Volumenförderleistung von 3.000 m³/h bis 4.000 m³/h auf, wobei die Anlage (100) auf einen K_{St}-Wert von bis zu 500 bar*m/s ausgelegt ist. Ein K_{St}-Wert von bis zu 500 bar*m/s tritt insbesondere bei Leichtmetallstäuben und metallischen Stäuben auf, wobei besonders Leichtmetallstäube extrem schnell reagieren und Temperaturen von bis zu 3.000 °C erzeugen.

Wie einleitend ausgeführt wurde, sind nach derzeitigem Kenntnisstand keine Entstaubungsanlagen bekannt, welche Schutzeinrichtungen für St 3-Metallstäube mit K_{St}-Werten über 300 bar*m/s aufweisen. Vielmehr gelten solche Anlagen aufgrund der großen Rohgasvolumina als unrealisierbar. Mit der vorliegenden Erfindung wird hingegen eine Anlage zur Verfügung gestellt, welche aufgrund des konstruktiv verringerten Rohgasvolumens tatsächlich K_{St}-Werte von bis zu 500 bar*m/s ermöglicht.

In einer erfindungsgemäßen Weiterbildung der Anlage (100) umfasst diese ferner
- einen innerhalb des Gehäuses (3) zwischen dem Filtermodul (1) und der Ansaugeinrichtung (7) angeordneten Freiraum (303),
- eine Gebläseeinheit mit einem Gebläsemotor und einem Gebläseauslass, die in dem Freiraum (303) verfahrbar angeordnet ist,
wobei der Gebläseauslass auf der Höhe des Filtermoduls (1) angeordnet ist und die Gebläseeinheit parallel zu dem Filtermodul (1) verfahrbar ist,
- eine Staubfangeinrichtung (17), die unterhalb der Aufnahme für das Filtermodul (1) in dem Zufuhrkanal (5) angeordnet ist, und
- einen Absperrschieber, der zwischen der Aufnahme und der Staubfangeinrichtung (17) angeordnet ist.

Bevorzugt stimmen die Schlitze des Gebläseauslasses in Größe und Anordnung mit den Schlitzen (1073) im Fixierrahmen (107) beim Verfahren der Gebläseeinheit überein.

Diese erfindungsgemäße Weiterbildung ermöglicht es, in regelmäßigen Abständen - insbesondere wenn der Druckverlust zwischen der stromaufwärtigen Seite des erfindungsgemäßen Filtermoduls (1) und dessen stromabwärtiger zu groß wird - ein Freiblasen des Filtermaterials (111). Dadurch, dass das Filtermaterial (111) in der vorstehend genannten Art und Weise fest eingespannt ist, wird die Reinigung der Faltung wesentlich erleichtert. Die Faltung kann in regelmäßigen Abständen von dem aus dem Gasstrom abgetrennten Staub freigeblasen werden, der sich während des Abscheidevorgangs allmählich festsetzt und die Filterleistung zunehmend beeinträchtigt. Dazu wird eine für diese Anlage (100) neu konzipierte Reinigungseinheit aus Gebläseeinheit mit Gebläsemotor und Gebläseauslass eingesetzt.

Innerhalb des Freiraums (303) kann die Gebläseeinheit auf dessen stromabwärtiger Seite an dem erfindungsgemäßen Filtermodul (1) linear verfahren werden, wobei der aus der Faltung des Filtermaterials (111) ausgeblasene Staub in die Staubfangeinrichtung (17) befördert wird, von wo er fachgerecht entsorgt werden kann.

Der Absperrschieber (siehe Figuren) dient dazu, dass kein Material austreten kann, wenn der Staubwagen geleert wird während die Anlage (100) in Betrieb ist. Durch den Einsatz des Schiebers wird der Brandschutz realisiert. Durch das Verschließen wird der Staubwagen luftdicht abgeschlossen und ein möglicher Brand erstickt.

Eine andere Ausführungsform der erfindungsgemäßen Anlage (100) umfasst ferner ein Entkopplungsmodul (19) zur explosionsmäßigen Entkopplung der Anlage (100) von dem Zufuhrkanal (5), das zwischen der Aufnahme für das Filtermodul (1) und dem Zufuhrkanal (5) angeordnet ist. Hiermit kann gewährleistet werden, dass eine möglicherweise trotz aller Vorsichtsmaßnahmen stattfindende Explosion weder die Anlage (100) noch den Zufuhrkanal (5) ernsthaft beschädigt. Das Entkopplungsmodul (19) ist dazu ausgelegt, den Zufuhrkanal (5) gegen die Strömungsrichtung (d.h. gegen den Explosionsverlauf) zu unterbrechen und so das Ausbreiten der Explosion zu verhindern.

Zusätzlich hat es sich als vorteilhaft erwiesen, eine Flammensperre (siehe Figuren) vorzusehen, die aus einem Gehäuse besteht, das vorzugsweise mit Stahlwolle gefüllt ist. Diese Flammensperre ist direkt zwischen Zufuhrkanal (5) und Entkopplungsmodul (19) montiert.

Für die Kompaktheit der erfindungsgemäßen Anlage (100) hat es sich als vorteilhaft herausgestellt, wenn der stromabwärts der Ansaugeinrichtung (7) angeordnete Abfuhrkanal (9) als Druckentlastung ausgelegt ist. Hierdurch wird das zusätzliche Vorsehen einer externen Druckentlastung, wie sie im Stand der Technik üblich ist, entbehrlich.

In einer speziellen Weiterbildung wird der Abfuhrkanal (9) innerhalb der erfindungsgemäßen Anlage (100) mehrfach umgelenkt (verschiedene Richtungsänderungen) und/oder mit freien Volumina versehen, um den Druck zu entlasten. Hierzu ist beispielsweise um die Ansaugeinrichtung (7) ein freies Volumen vorgesehen, das Druck aufnehmen und abbauen kann, bevor der Restdruck sich durch eine Öffnung in den mehrfach umgelenkten Abfuhrkanal (9) ausbreiten kann. Das freie Volumen um die Ansaugeinrichtung (7) dient im Normalbetrieb zudem der Kühlung derselben.

Eine wesentliche Ausführungsform der erfindungsgemäßen Anlage (100) sieht vor, dass in dem Gehäuse (3) der Abfuhrkanal (9), der Schaltkasten (13) und das Entkopplungsmodul (19) integriert sind, so dass die Anlage (100) explosionsfest ausgeführt ist. Mit dieser Ausführungsform ergibt sich durch den hohen Integrationsgrad eine kompakte Anlage (100), die außer dem von extern vorgesehenen Zufuhrkanal (5) keine Anbauteile oder Anbauelemente aufweist.

Wie vorstehend schon ausgeführt, ist auch der Schaltkasten (13) in das Gehäuse integriert, was für herkömmliche Anlagen schwer realisierbar ist. Gemäß der vorliegenden Erfindung wird der Schaltkasten (13) jedoch durch die ausgeklügelte Führung der Gasströme mit gekühlt. Das Gehäuse (3) weist dazu vorzugsweise eine eigene Zuluftöffnung im Bodenbereich auf, durch welche Frischluft zum Kühlen in den Schaltkasten (13) gezogen wird. Der Schaltkasten (13) weist ferner eine druckfeste strömungstechnische Verbindung zum Freiraum (303), der wiederum mittels der Ansaugeinrichtung (7) entlüftet wird. Indirekt zieht daher die Ansaugeinrichtung (7) die Kühlluft aus dem Schaltkasten (13) ab. Die strömungstechnische Verbindung ist dabei als Rückschlagventil ausgeführt, so dass sich Explosionsdruck nicht in den Schaltkasten (13) hinein ausbreiten kann.

Eine andere Weiterbildung sieht vor, dass die erfindungsgemäße Anlage (100) ferner aktive und/oder passive Schallschutzvorrichtungen umfasst, um den Schalldruckpegel zu verringern.

Diese Schallschutzvorrichtungen können erfindungsgemäß einerseits in Schallschutzelementen bestehen, die durch eine Art Sandwichkonstruktion Schall absorbieren. Mit diesen Schallschutzelementen ist vorzugsweise das Fußgestell der Anlage (100) ausgekleidet.

Diese Schallschutzvorrichtungen können erfindungsgemäß andererseits darin bestehen, dass der Abfuhrkanal (9) im Fußgestell der Anlage (100) mehrfach umgelenkt wird, was den Schallschutz weiter steigert. Diese Art der Schallschutzvorrichtung fällt mit der für den Fall einer Staubexplosion vorgesehenen Druckentlastung zusammen.

Mit dieser erfindungsgemäßen Maßnahme der speziellen Strömungsführung in der Anlage (100) kann der Schalldruckpegel auf unter 60 dB (A) reduziert werden, im Vergleich zu 75 dB (A) bei Filteranlagen aus dem Stand der Technik.

Es ist ferner bevorzugt, die erfindungsgemäße Anlage (100) mit einem HEPA-Feinststaubfilter auszurüsten, welcher an den Austritt (siehe Figuren) angeflanscht werden kann. So kann die aus der erfindungsgemäßen Anlage (100) austretende Luft direkt in die Umgebung, z.B. in die Halle, entlassen werden, ohne eine Abführung nach draußen vorsehen zu müssen. Sowohl der Restdruck der Abluft als auch deren Reinheit ermöglichen dies.

Die erfindungsgemäße Anlage (100) weist vorzugsweise bei einer Absaugleistung von 7.000 m³/h bis 8.000 m³/h ein Raumvolumen von 6 m³ bis 7 m³ auf. Damit wird nur ein Bruchteil des Platzes in den Hallen benötigt, den konventionelle Filteranlagen erfordern. Eine gute Zugänglichkeit der einzelnen Komponenten wie Filtermodule (1), Entkopplungseinrichtung oder Staubwagen erleichtert und beschleunigt Maßnahmen wie Reinigung, Austausch, Überprüfung etc., sowie Platz für Schaltschrank und Verkabelung.

Die Anlagenverfügbarkeit wird durch das Konzept erheblich verbessert, da bei Ausfall eines Ventilators (in der Ansaugeinrichtung (7)) die anderen Ventilatoren die Luftförderleistung übernehmen und damit die Luftförderleistung kontinuierlich konstant gehalten wird. Selbst bei einer Reparatur kann durch das Konzept die Anlage (100) weiter in Betrieb bleiben. Beim Stand der Technik fällt die Filteranlage dagegen komplett aus.

Die Größe einer erfindungsgemäßen Anlage (100) (d.h. Raumvolumen) mit einer Absaugleistung von 7.500 m³/h beträgt etwa 6,6 m³, während eine konventionelle Filteranlage nach dem Stand der Technik mit der gleichen Leistung etwa 14 m³ bis 20 m³ einnimmt.

Da alle wesentlichen Funktionen in der erfindungsgemäßen Anlage (100) bereits integriert sind, sind das Aufstellen und die Inbetriebnahme derselben denkbar einfach und ohne externe Montageteams möglich. Grundsätzlich muss an die erfindungsgemäße Anlage (100) nur die Förderleitung für die Materialzufuhr angeschlossen werden, der Anschluss an das Stromnetz erfolgt nach dem Plug-andplay-Prinzip.

Die vorstehend genannte Aufgabe wird in einem dritten Aspekt der vorliegenden Erfindung durch einen Anlagenverbund zur Filterung von Stäuben gelöst, umfassend
- zumindest zwei erfindungsgemäße Anlagen (100) zur Filterung von Stäuben, wie sie vorstehend beschrieben wurde,
wobei die zumindest zwei Anlagen (100) übereinander angeordnet sind und so zueinander ausgerichtet sind, dass die Zufuhrkanäle (5) übereinander liegen,
- eine Trichtereinheit (21), welche die Zufuhrkanäle (5) der zumindest zwei Anlagen (10) aufnimmt und strömungsmäßig voneinander entkoppelt.

Über die erfindungsgemäß vorgesehene Trichtereinheit kann der aus den erfindungsgemäßen Filtermodulen (1) ausgeblasene Staub getrennt von den Zufuhrkanälen (5) aufgefangen und abgeleitet werden.

Der erfindungsgemäße Anlagenverbund ermöglicht es aufgrund seines modularen Konzepts, die Volumenstromleistung auch nachträglich zu verdoppeln oder zu verdreifachen. Dies kann dadurch erfolgen, dass sich die einzelnen erfindungsgemäßen Anlagen (100) baukastenartig zusammensetzen lassen. Je nach benötigter Absaugleistung können bis zu drei erfindungsgemäße Anlagen (100) übereinander angeordnet werden. Auch eine nachträgliche Erweiterung und damit beispielsweise Verdoppelung der Absaugleistung ist mit wenigen Handgriffen realisierbar.

Ein weiterer Vorteil der erfindungsgemäßen Anlage (100) innerhalb des Anlagenverbunds liegt darin, dass die einzelnen erfindungsgemäßen Anlagen (100) unabhängig voneinander betrieben werden können. Hierfür können für jede einzelne erfindungsgemäße Anlage (100) eigene Zufuhrkanäle (5) vorgesehen werden. Aufgrund des in jeder einzelnen erfindungsgemäßen Anlage (100) vorhandenen Schaltschranks (13) ist auch Steuerung unabhängig voneinander möglich.

Wenn in der Beschreibung des erfindungsgemäßen Filtermoduls (1) und/oder der erfindungsgemäßen Anlage (100) Verfahrensmerkmale genannt werden, so beziehen sich diese insbesondere auf das erfindungsgemäße Verfahren. Ebenso beziehen sich gegenständliche Merkmale, die in der Beschreibung des erfindungsgemäßen Verfahrens angeführt werden, auf das erfindungsgemäße Filtermodul (1) und/oder die erfindungsgemäße Anlage (100).

Die vorstehend genannte Aufgabe wird in einem vierten Aspekt der vorliegenden Erfindung durch ein Verfahren zur Abtrennung von Stäuben aus einem Gasstrom, umfassend die Schritte
a) Einleiten des mit Stäuben beladenen Gasstroms in einen Zufuhrkanal (5) einer Anlage (100) zur Filterung von Stäuben, wie sie vorstehend definiert wurde,
b) Ansaugen des mit Stäuben beladenen Gasstroms mit einer Ansaugeinrichtung (7) der Anlage (100) in ein Filtermodul (1) für Stäube, wie es vorstehend definiert wurde,
c) Abtrennen der Stäube aus dem mit Stäuben beladenen Gasstrom in dem Filtermodul (1), wobei die Stäube in einem Filtermaterial (111) aufgefangen werden und der Gasstrom über einen Abfuhrkanal (9) der Anlage (100) abgeführt wird,
d) kontinuierliches Erfassen des Druckverlaufs des Gasstroms stromabwärts des Filtermoduls (1),
e) kontinuierliches Messen der Strömungsgeschwindigkeit in der Anlage (100) mittels eines Strömungssensors,
f) Aussetzen der Schritte a), b) und c) bei Unterschreiten eines vorbestimmten Drucks,
g) Reinigen oder Austauschen des Filtermoduls (1),
h) Wiedereinsetzen des Verfahrens mit Schritt a).

In Schritt c) kann der über einen Abfuhrkanal (9) der erfindungsgemäßen Anlage (100) abgeführte Gasstrom zusätzlich über einen zusätzlichen Feinststaubfilter (HEPA) geleitet und abgeführt werden. Damit kann die erfindungsgemäße Anlage (100) auch in geschlossenen Räumen direkt betrieben werden, ohne Personen zu gefährden.

Das für den Betrieb einer einzelnen erfindungsgemäßen Anlage (100) beschriebene Verfahren kann nahezu identisch für den erfindungsgemäßen Anlagenverbund angewendet werden. Bei diesem Betrieb im Anlagenverbund übernimmt beim Reinigungsvorgang eine der Anlagen (100) die Leistung der anderen Anlage (100) mit, so dass die Strömungsgeschwindigkeit im Zufuhrkanal (5) nicht unter 20 m/s sinkt.

Weitere Ziele, Merkmale, Vorteile und Anwendungsmöglichkeiten ergeben sich aus der nachfolgenden Beschreibung von die Erfindung nicht einschränkenden Ausführungsbeispielen anhand der Figuren. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbeziehung. Es zeigen:
- Fig. 1:: eine schematische Explosionsdarstellung eines erfindungsgemäßen Filtermoduls 1 nach einer Ausführungsform der Erfindung,
- Fig. 2:: eine schematische teilweise aufgeschnittene Seitenansicht eines erfindungsgemäßen Filtermoduls 1 nach einer Ausführungsform der Erfindung,
- Fig. 3:: eine schematische Detailansicht DA1 aus Fig. 2,
- Fig. 4:: eine schematische Detailansicht DA2 aus Fig. 3,
- Fig. 5:: eine schematische Darstellung einer erfindungsgemäßen Anlage 100 nach einer Ausführungsform der Erfindung von vorne,
- Fig. 6:: eine schematische Darstellung einer erfindungsgemäßen Anlage 100 nach einer Ausführungsform der Erfindung von der Seite,
- Fig. 7:: eine maßstäbliche Gegenüberstellung einer herkömmlichen Filteranlage nach dem Stand der Technik mit einer erfindungsgemäßen Anlage 100 nach einer Ausführungsform der Erfindung
- Fig. 8: eine schematische ausgeschnittene Teilansicht eines erfindungsgemäßen Filtermoduls 1 nach einer Ausführungsform der Erfindung,
- Fig. 9: eine schematische ausgeschnittene und erweiterte Teilansicht des in Fig. 8 gezeigten erfindungsgemäßen Filtermoduls 1 und
- Fig. 10: eine schematische Detailansicht DA3 aus Fig. 9.

In den Figuren werden alle gleichen Bauteile mit den gleichen Bezugszeichen benannt, aus Gründen der Übersichtlichkeit sind aber nicht in allen Darstellungen alle Bezugszeichen eingefügt.

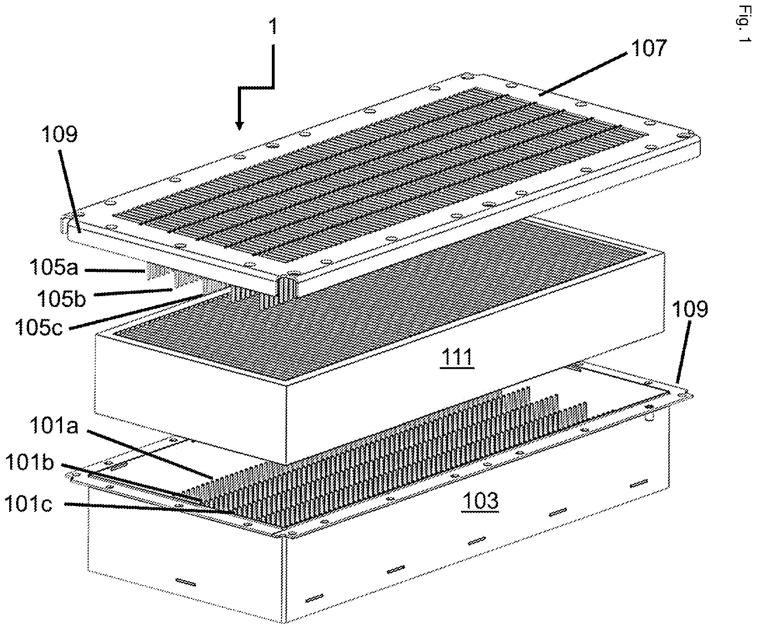

Figur 1 stellt schematisch in einer Explosionsdarstellung ein erfindungsgemäßes Filtermodul 1 nach einer Ausführungsform der Erfindung dar. In den Grundrahmen 103, in dem in dieser Ausführungsform fünf Reihen von kammartigen Grundelementen 101a, 101b, 101c, 101d, 101e vorgesehen sind, wird von oben das Filtermaterial 111 eingesetzt, das vorzugsweise als eine Art Filterblock mit fertiger Faltung ausgeführt ist. Die einzelnen Falten greifen dabei in die kammartigen Grundelemente 101a, 101b, 101c, 101d, 101e ein. Von oben wird dann der Fixierrahmen 107 aufgenommen, bei dem ebenfalls fünf Reihen von kammartigen Fixierelementen 105a, 105b, 105c, 105d, 105e vorgesehen sind. Diese kammartigen Fixierelementen 105a, 105b, 105c, 105d, 105e greifen in die von den kammartigen Grundelementen 101a, 101b, 101c, 101d, 101e von unten gestützte Faltung ein und klemmen das Filtermaterial 111 fest.

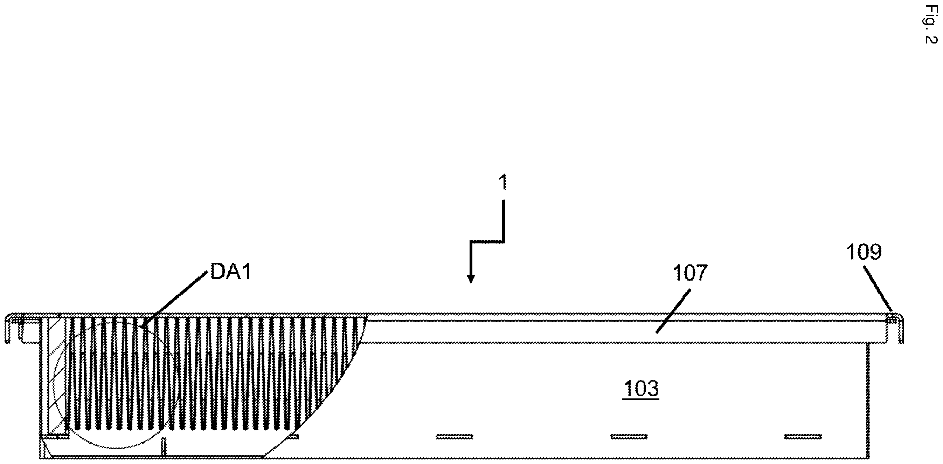

In Figur 2 wird ein zusammengesetztes Filtermodul 1 gezeigt, das im linken Bereich ausgeschnitten ist. Der Kreis umschließt die Detailansicht DA1. An den Enden oder umlaufend ist Grundrahmen 103 mit dem Fixierrahmen 107 über die Befestigungseinrichtungen 109 verbunden, beispielsweise verschraubt.

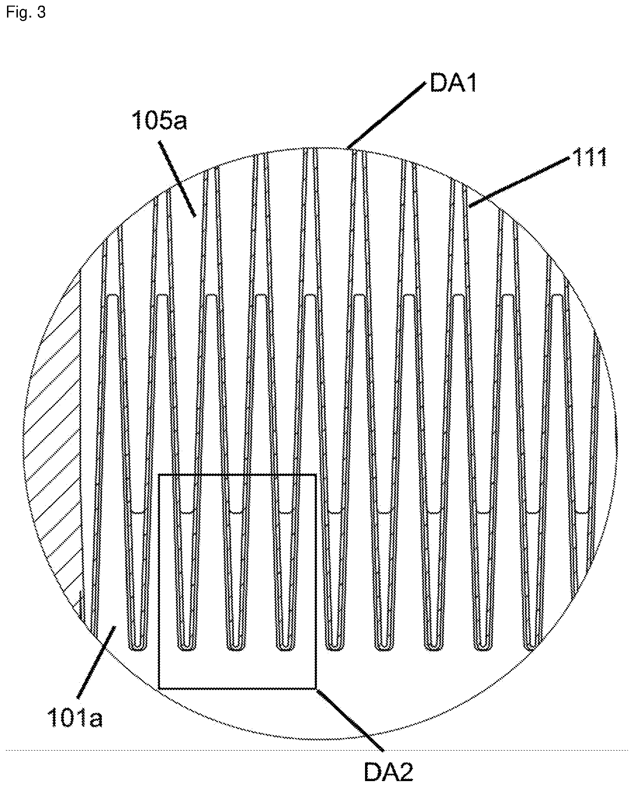

Figur 3 zeigt schematisch die Detailansicht DA1 aus Figur 2. Aus dieser Darstellung ist zu erkennen, wie die kammartigen Fixierelemente 105a, 105b, 105c, 105d, 105e geometrisch komplementär zu den kammartigen Grundelementen 101a, 101b, 101c, 101d, 101e ausgebildet sind und zwischen sich das Filtermaterial 111 einklemmen. Das Rechteck in dieser Darstellung umschließt die Detailansicht DA2.

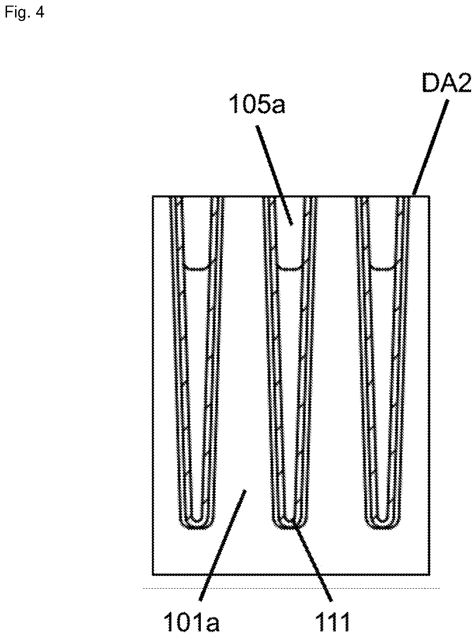

Die Detailansicht DA2 wird in Figur 4 schematisch dargestellt. Dieser weiter vergrößerten Darstellung lässt sich entnehmen, wie jede Spitze der Faltung durch eine innere Ecke der kammartigen Grundelemente 101a, 101b, 101c, 101d, 101e bzw. der kammartigen Fixierelemente 105a, 105b, 105c, 105d, 105e in einer Weise gestützt wird, dass ein Ausbeulen durch abgetrenntes Material verhindert wird. Ebenso wird eine Sackbildung des Filtermaterial 111 vermieden.

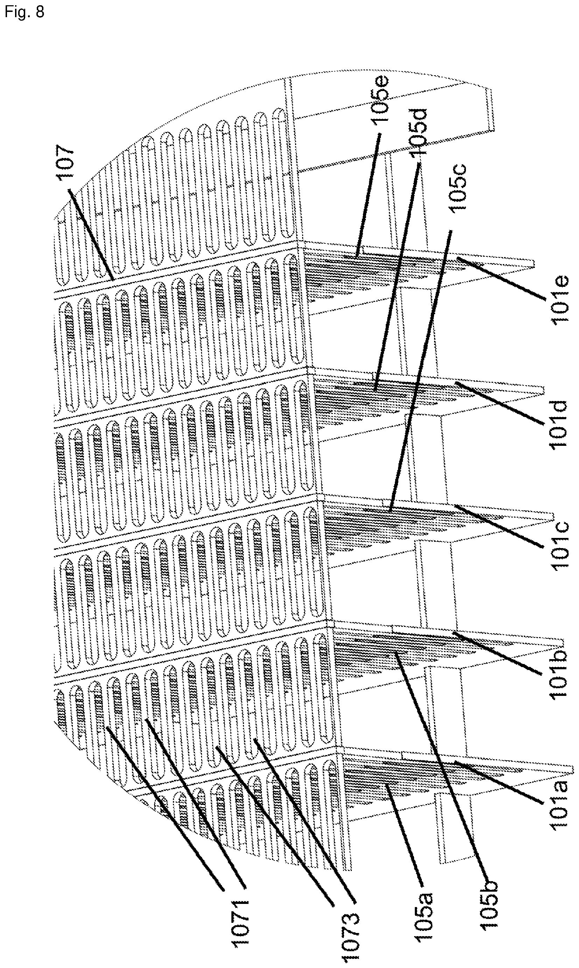

In Figur 8 wird das erfindungsgemäße Filtermodul 1 nach einer Ausführungsform der Erfindung als schematische ausgeschnittene Teilansicht gezeigt. Konkret sind von unten die Anordnungen von kammartigen Grundelementen 101a, 101b, 101c, 101d dargestellt, in die von oben die Anordnungen von kammartigen Fixierelementen 105a, 105b, 105c, 105d eingreifen. Das Filtermaterial 111 ist in dieser Darstellung nicht vorhanden.

Der Fixierrahmen 107 weist hier gleichmäßig und auf die Anordnungen von kammartigen Fixierelementen 105a, 105b, 105c, 105d geometrisch abgestimmte Stege 1071 und Schlitze 1073 auf. In der Darstellung ist gut zu erkennen, dass die Länge der Schlitze 1073 dem Abstand zwischen den kammartigen Fixierelementen 105a, 105b, 105c, 105d und dass die Breite der Schlitze 1073 dem Abstand von deren Zinken entspricht.

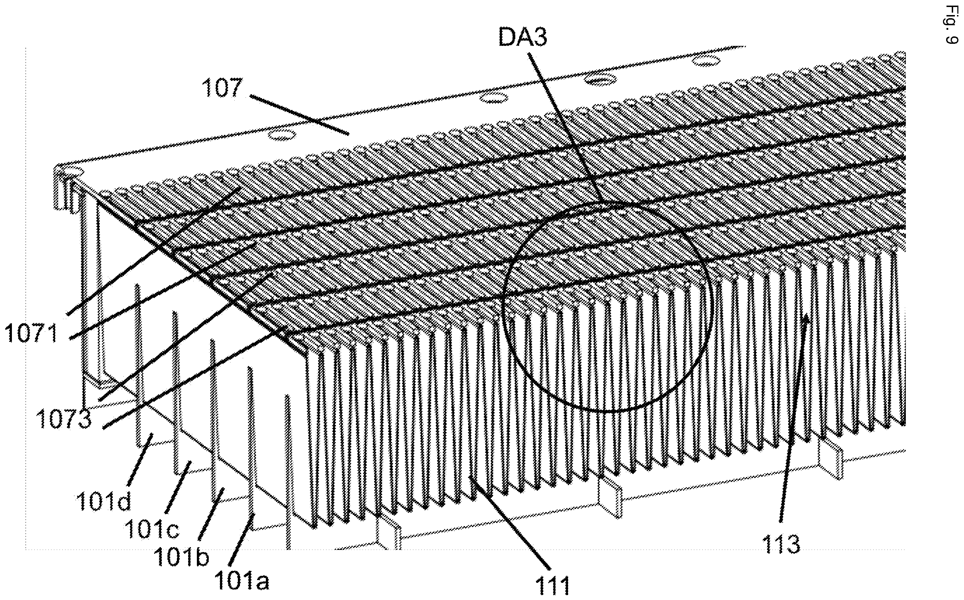

Figur 9 zeigt grundsätzlich die Darstellung der Figur 8, wobei hier zusätzlich das Filtermaterial 111 hinzugefügt ist. Deutlich wird aus dieser Darstellung zunächst noch einmal die Klemmung des Filtermaterials 111 zwischen den einzelnen Zinken der kammartigen Grundelemente 101a, 101b, 101c und der kammartigen Fixierelemente 105a, 105b, 105c.

Da die Vorderkante des erfindungsgemäßen Filtermoduls 1 in dieser Darstellung aufgeschnitten ist, fällt der Blick in die Filterkammern 113, in die hier ein Pfeil zeigt. Wie vorstehend schon angegeben, werden die Filterkammern 113 jeweils durch eine Faltung des Filtermaterials 111 und gegenüberliegende Zinken der kammartigen Fixierelemente 105a, 105b, 105c definiert. Nach unten (bzw. nach oben, hier nicht zu sehen) schließen die Filterkammern 113 durch eine Spitze der Faltung ab. Aus der Gesamtdarstellung wird deutlich, wie stabil die einzelnen Filterkammern 113 ausgebildet sind.

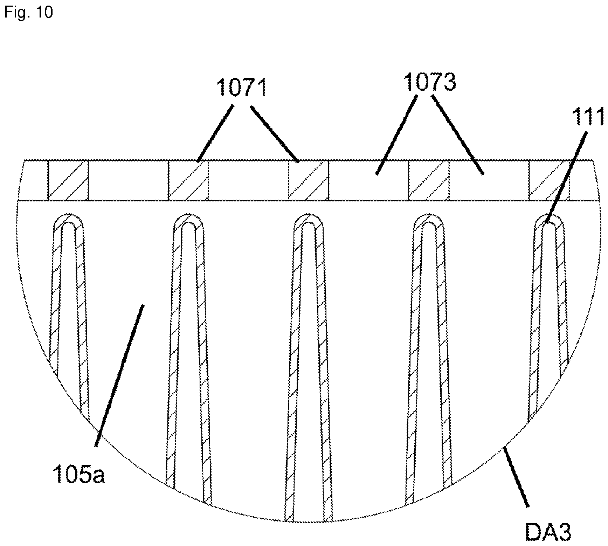

In Figur 10 wird die in Figur 9 mit einem Kreis schematisch dargestellte Detailansicht DA3 gezeigt. Der dargestellte Ausschnitt aus dem erfindungsgemäßen Filtermodul 1 zeigt oben den Fixierrahmen 107, in dem in Schnittansicht Stege 1071 und Schlitze 1073 abwechselnd angeordnet sind. Lediglich zur Orientierung sind noch einmal kammartigen Fixierelemente 105 angegeben. Da sich der Explosionsdruck im Falle einer Staubexplosion in dieser Darstellung von unten nach oben ausbreitet, ist in dieser Darstellung gut zu erkennen, wie die Abstützung der Spitzen der Faltung des Filtermaterials 111 durch die Stege 1071 erfolgt.

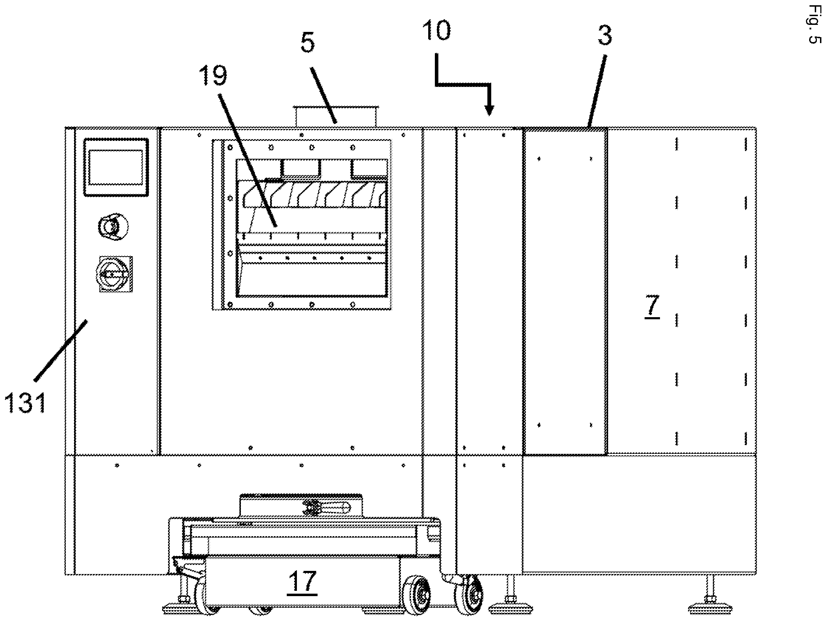

Figur 5 zeigt eine schematische Darstellung einer erfindungsgemäßen Anlage 100 von vorne. Der Blick fällt zunächst auf das Entkopplungsmodul 19, das dem in dieser Darstellung nicht zu sehenden Filtermodul 1 vorgeschaltet ist. Über dem Entkopplungsmodul 19 ist der Stutzen des Zufuhrkanals 5 zu sehen, an welchen eine herkömmliche Zuleitung für die abzureinigenden Gasströme angeschlossen wird. Unterhalb des Entkopplungsmoduls 19 mit dahinerliegendem Filtermodul 1 ist die Staubfangeinrichtung 17 angeordnet, in welche der aus dem Filtermodul 1 ausgeblasene Staub aufgefangen wird. In dieser Ausführungsform ist die Staubfangeinrichtung 17 fahrbar ausgeführt, so dass ein Austausch schnell erfolgen kann.

Linkerhand des Entkopplungsmoduls 19 mit dahinerliegendem Filtermodul 1 findet sich das Bedienpaneel 131 für den integrierten Schaltkasten 13, der in dieser Figur nicht dargestellt ist. Damit ist das Bedienpaneel sehr gut zugänglich. Rechterhand an der Seite des Gehäuses 3 ist der in dieser Darstellung nicht vollständig abgebildete Freiraum 303 zwischen Filtermodul 1 und Ansaugeinrichtung 7 angeordnet.

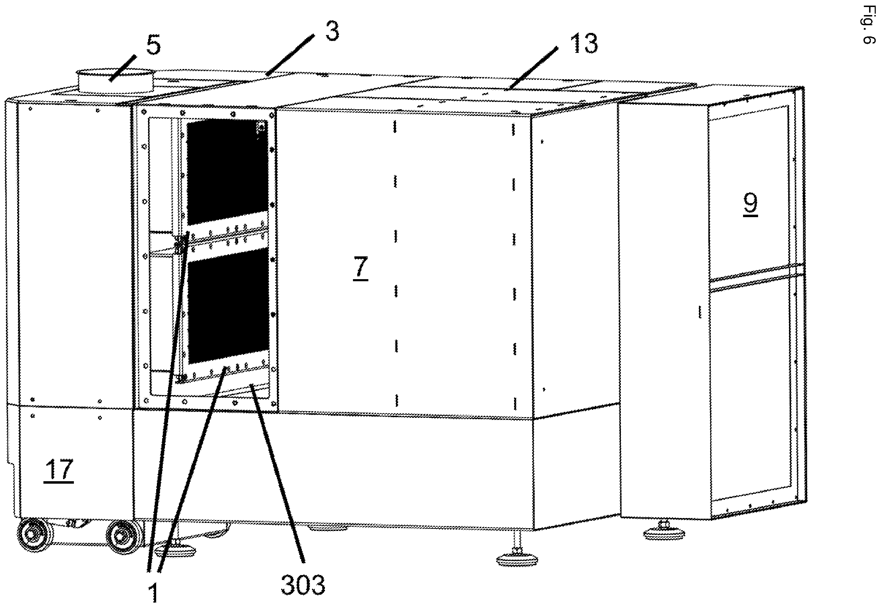

In Figur 6 wird die in Figur 5 dargestellte Anlage 100 von der Seite gezeigt. Der Blick fällt schräg in den Freiraum 303 des Gehäuses 3, wo in dieser speziellen Ausführungsform zwei erfindungsgemäße Filtermodule 1 übereinander angeordnet sind. In diesem Freiraum 303 wird die Gebläseeinheit mit Gebläsemotor und Gebläseauslass angeordnet, die hier jedoch nicht bildlich dargestellt wird. Der Freiraum 303 wird im Betriebszustand verschlossen, wie das in Figur 5 angedeutet ist.

Ansaugeinrichtung 7 und Abfuhrkanal 9 sind nicht im Detail dargestellt. Hinter der Ansaugeinrichtung 7 führt der Abfuhrkanal 9 mehrfach umgelenkt zu seinem nicht dargestellten Abluftauslass, wobei durch die mehrfache Umlenkung sowie zusätzlich eingebrachte aktive und/oder passive Schallschutzvorrichtungen eine deutliche Reduzierung des Schallpegels erreicht wird. Gleichzeitig dient diese mehrfache Umlenkung, wie vorstehend beschrieben, auch der Druckentlastung.

In der Darstellung der Figur 6 hinten dargestellt ist der Schaltkasten 13 angeordnet, der vollständig in die Anlage 100 integriert ist. Er wird über das in Figur 5 dargestellte Bedienpaneel 131 auf der Vorderseite gesteuert.

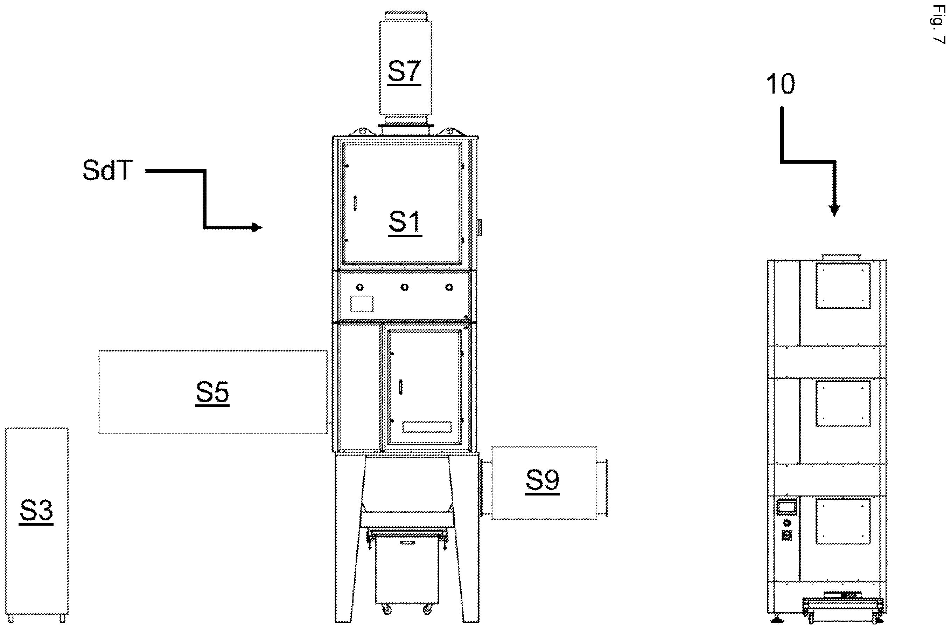

Figur 7 zeigt schließlich eine maßstäbliche Gegenüberstellung einer herkömmlichen Filteranlage S1 links nach dem Stand der Technik mit einer erfindungsgemäßen Anlage 100 rechts nach einer Ausführungsform der Erfindung. Während bei der herkömmlichen Filteranlage S1 ein Schaltschrank S3 separat neben der Filteranlage S1 angeordnet werden muss, ist gemäß der vorliegenden Erfindung der Schaltkasten 13 in das Gehäuse 3 der Anlage 100 integriert.

An der herkömmlichen Filteranlage S1, die für genommen schon deutlich größer ausgeführt ist, fallen vor allem die seitlich separat vorgesehene, aber notwendige Explosionsdruckentlastung S5, der oben separat aufgesetzte Schalldämpfer S7 sowie die seitlich separat vorgesehene und ebenso notwendige Explosionsentkopplung S9 auf. Alle diese separat an der herkömmlichen Filteranlage S1 vorgesehenen Einrichtungen erhöhen deren Platzbedarf enorm. Demgegenüber ist die erfindungsgemäße Anlage 100 durch die Integration aller notwendigen Einrichtungen sehr platzsparend ausgebildet.

Die Konstruktion des erfindungsgemäßen Filtermoduls 1 sowie der erfindungsgemäßen Anlage 100 wurden mithilfe von Strömungssimulationen entwickelt und die explosionstechnischen Effekte durch experimentelle Tests verifiziert. Die Integration einer explosionstechnischen Entkopplung in die erfindungsgemäße Anlage 100 stellt sicher, dass eine Explosion sich nicht auf andere Anlagenteile ausbreiten kann. Der Brandschutz ist durch die doppelwandige Gehäuseausführung und das geringe Rohgasvolumen gewährleistet.

Das erfindungsgemäße Filtermodul 1 sowie die erfindungsgemäße Anlage 100 ermöglichen es erstmals, hochexplosive und heiße Stäube, insbesondere Metallstäube, ganz besonders Leichtmetallstäube, mit einem Trockenabscheider abzusaugen und zu filtern, in den alle für den Explosions- und Brandschutz erforderlichen Komponenten integriert sind.

Als integrale Komponente des Systems kommt die durch das deutsche Patent DE 10 2016 008 204B4 geschützte explosionstechnische Entkopplungseinrichtung zum Einsatz.

Die Zielgruppe für die vorliegende Erfindung sind u. a. Planer, Hersteller und Betreiber industrieller Anlagen für die Automobil-, Strahlanlagen- und Strahlmittelindustrie sowie andere Branchen, in denen hochexplosive und/oder heiße Stäube gefiltert werden müssen. Es wird davon ausgegangen, dass die vorliegende Erfindung mittelfristig nicht nur konventionelle Trockenabscheider, sondern auch die unter Umweltschutzgesichtspunkten äußerst problematischen Nassabscheider ersetzen kann, die oft zur Filterung explosiver Stäube eingesetzt werden.

Neben der direkten Vermarktung bei den o. g. Zielgruppen wird die Perspektive gesehen, die vorliegende Erfindung im Zusammenhang mit Batterieprüfständen einzusetzen.

Aus mehreren Kreisen ist bekannt, dass wegen der geplanten Umstellung auf batteriebetriebene Fahrzeuge ein erhöhter Bedarf an Batterieprüfkapazitäten besteht. Da bei der Prüfung von Batterien heiße Metallpartikel freigesetzt werden und abgesaugt werden müssen, stellt die vorliegende Erfindung eine optimale Ergänzung für Batterieprüfstände dar.

### Bezugszeichen

- 1: Filtermodul
- 101: kammartige Grundelemente
- 103: Grundrahmen
- 105: kammartige Fixierelemente
- 107: Fixierrahmen
- 1071: Stege
- 1073: Schlitze
- 109: Befestigungseinrichtung
- 111: Filtermaterial
- 113: Filterkammern
- 3: Gehäuse
- 303: Freiraum
- 5: Zufuhrkanal
- 7: Ansaugeinrichtung
- 9: Abfuhrkanal
- 13: Schaltkasten
- 131: Bedienpaneel Schaltkasten
- 17: Staubfangeinrichtung
- 19: Entkopplungsmodul
- 100: Anlage
- DA1: Detailausschnitt 1
- DA2: Detailausschnitt 2
- DA3: Detailausschnitt 3
- SdT: Stand der Technik
- S1: Filteranlage (herkömmlich)
- S3: Schaltschrank
- S5: Explosionsdruckentlastung
- S7: Schalldämpfer
- S9: Explosionsentkopplung

## Patentansprüche

1. Filtermodul (1) für Stäube, umfassend
- eine erste Anordnung von mindestens zwei kammartigen Grundelementen (101a, 101b), die in einem Grundrahmen (103) aufgenommen sind,
- eine zweite Anordnung von mindestens zwei kammartigen Fixierelementen (105a, 105b), die in einem Fixierrahmen (107) aufgenommen sind,
wobei die kammartigen Fixierelemente (105a, 105b) geometrisch komplementär zu den kammartigen Grundelementen (101a, 101b) ausgebildet sind,
- eine Befestigungseinrichtung (109) zum reversiblen Verbinden des Grundrahmens (103) mit dem Fixierrahmen (107) und
- ein Filtermaterial (111), das eine Faltung aufweist,
wobei das Filtermaterial (111) über die erste Anordnung von kammartigen Grundelementen (101a, 101b) gelegt und mit der zweiten Anordnung von kammartigen Fixierelementen (105a, 105b) fixiert ist,
wobei der Fixierrahmen (107) eine Gitterstruktur mit Stegen (1071) und Schlitzen (1073) aufweist, wobei die Stege (1071) auf einer Reingasseite jeweils die Enden der Faltung des Filtermaterials (111) stützen.

2. Filtermodul (1) nach Anspruch 1, wobei
der Abstand zwischen den mindestens zwei kammartigen Grundelementen (101a, 101b) mindestens 30 mm bis 50 mm, bevorzugt 40 mm, und
der Abstand zwischen den mindestens zwei kammartigen Fixierelementen (105a, 105b) mindestens 30 mm bis 50 mm, bevorzugt 40 mm, beträgt.

3. Filtermodul (1) nach Anspruch 1 oder 2, wobei das Filtermaterial (111) für jede Falte auf einer Länge von mindestens 40 mm, bevorzugt mindestens 50 mm, zwischen einem der kammartigen Grundelemente (101a, 101b) und einem der korrespondierenden kammartigen Fixierelemente (105a, 105b) fixiert ist.

4. Filtermodul (1) nach einem der Ansprüche 1 bis 3, wobei das Filtermaterial (111) an der Spitze jeder Falte auf zumindest einer Seite durch eines der kammartigen Grundelemente (101a, 101b) oder durch eines der kammartigen Fixierelemente (105a, 105b) gestützt wird.

5. Filtermodul (1) nach einem der Ansprüche 1 bis 4, wobei der Fixierrahmen (107) Schlitze aufweist, deren Länge dem Abstand zwischen den mindestens zwei kammartigen Grundelementen (101a, 101b) entspricht und deren Abstand dem Abstand der Faltung des Filtermaterials (111), entspricht.

6. Filtermodul (1) nach einem der Ansprüche 1 bis 5, wobei durch das Fixieren des Filtermaterials (111) zwischen der ersten Anordnung von kammartigen Grundelementen (101a, 101b) und der zweiten Anordnung von kammartigen Fixierelementen (105a, 105b) zwischen zwei benachbarten Anordnungen zusammen mit der Gitterstruktur des Fixierrahmens (107) einzelne Filterkammern (113) gebildet werden.

7. Anlage (100) zur Filterung von Stäuben, umfassend
- das Filtermodul (1) nach einem der Ansprüche 1 bis 6,
- ein Gehäuse (3), das eine Aufnahme für das Filtermodul (1) aufweist,
- einen stromaufwärts der Aufnahme für das Filtermodul (1) angeordneten Zufuhrkanal (5),
- eine in dem Gehäuse (3) angeordnete Ansaugeinrichtung (7), die in Strömungsverbindung mit dem Filtermodul (1) steht,
- einen stromabwärts der Ansaugeinrichtung (7) angeordneten Abfuhrkanal (9),
- einen Drucksensor, der zwischen dem Filtermodul (1) und der Ansaugeinrichtung (7) angeordnet ist, und
- einen Schaltkasten (13), der elektrisch zumindest mit der Ansaugeinrichtung (7) und dem Drucksensor verbunden ist.

8. Anlage (100) nach Anspruch 7, die bei einem Rohgasvolumen von bis zu 0,1 m³ eine Volumenförderleistung von 3.000 m³/h bis 4.000 m³/h aufweist, wobei die Anlage (100) auf einen K_{St}-Wert von bis zu 500 bar*m/s ausgelegt ist.

9. Anlage (100) nach Anspruch 7 oder 8, ferner umfassend
- einen innerhalb des Gehäuses (3) zwischen dem Filtermodul (1) und der Ansaugeinrichtung (7) angeordneten Freiraum (303),
- eine Gebläseeinheit mit einem Gebläsemotor und einem Gebläseauslass, die in dem Freiraum (303) verfahrbar angeordnet ist,
wobei der Gebläseauslass auf der Höhe des Filtermoduls (1) angeordnet ist und die Gebläseeinheit parallel zu dem Filtermodul (1) verfahrbar ist,
- eine Staubfangeinrichtung (17), die unterhalb der Aufnahme für das Filtermodul (1) in dem Zufuhrkanal (5) angeordnet ist,
- einen Absperrschieber, der zwischen der Aufnahme und der Staubfangeinrichtung (17) angeordnet ist.

10. Anlage (100) nach einem der Ansprüche 7 bis 9, ferner umfassend ein Entkopplungsmodul (19) zur explosionsmäßigen Entkopplung der Anlage (100) von dem Zufuhrkanal (5), das zwischen der Aufnahme für das Filtermodul (1) und dem Zufuhrkanal (5) angeordnet ist.

11. Anlage (100) nach einem der Ansprüche 7 bis 10, wobei der stromabwärts der Ansaugeinrichtung (7) angeordnete Abfuhrkanal (9) als Druckentlastung ausgelegt ist.

12. Anlage (100) nach einem der Ansprüche 7 bis 11, wobei in dem Gehäuse (3) der Abfuhrkanal (9), der Schaltkasten (13) und das Entkopplungsmodul (19) integriert sind, so dass die Anlage (100) explosionsfest ausgeführt ist.

13. Anlagenverbund zur Filterung von Stäuben, umfassend
- zumindest zwei Anlagen (100) zur Filterung von Stäuben nach einem der Ansprüche 7 bis 12,
wobei die zumindest zwei Anlagen (100) übereinander angeordnet sind und so zueinander ausgerichtet sind, dass die Zufuhrkanäle (5) übereinander liegen,
- eine Trichtereinheit, welche die Zufuhrkanäle (5) der zumindest zwei Anlagen (10) aufnimmt und strömungsmäßig voneinander entkoppelt.

14. Verfahren zur Abtrennung von Stäuben aus einem Gasstrom, umfassend die Schritte
a) Einleiten des mit Stäuben beladenen Gasstroms in einen Zufuhrkanal (5) einer Anlage (100) zur Filterung von Stäuben nach einem der Ansprüche 7 bis 12,
b) Ansaugen des mit Stäuben beladenen Gasstroms mit einer Ansaugeinrichtung (7) der Anlage (100) in ein Filtermodul (1) für Stäube nach einem der Ansprüche 1 bis 6,
c) Abtrennen der Stäube aus dem mit Stäuben beladenen Gasstrom in dem Filtermodul (1), wobei die Stäube in einem Filtermaterial (111) aufgefangen werden und der Gasstrom über einen Abfuhrkanal (9) der Anlage (100) abgeführt wird,
d) kontinuierliches Erfassen des Druckverlaufs des Gasstroms stromabwärts des Filtermoduls (1),
e) kontinuierliches Messen der Strömungsgeschwindigkeit in der Anlage (100) mittels eines Strömungssensors,
f) Aussetzen der Schritte a), b) und c) bei Unterschreiten eines vorbestimmten Drucks,
g) Reinigen oder Austauschen des Filtermoduls (1),
h) Wiedereinsetzen des Verfahrens mit Schritt a).

## Claims

1. Filter module (1) for dusts, comprising
- a first arrangement of at least two comb-like base elements (101a, 101b) that are held in a base frame (103),
- a second arrangement of at least two comb-like fixing elements (105a, 105b) that are held in a fixing frame (107),
the comb-like fixing elements (105a, 105b) being geometrically complementary to the comb-like base elements (101a, 101b),
- a fastening device (109) for reversibly connecting the base frame (103) to the fixing frame (107) and
- a filter material (111) which has a folding,
wherein the filter material (111) is laid over the first arrangement of comb-like base elements (101a, 101b) and fixed with the second arrangement of comb-like fixing elements (105a, 105b),
the fixing frame (107) having a lattice structure with webs (1071) and slots (1073), wherein the webs (1071) on a clean gas side respectively support the ends of the fold of the filter material (111).

2. The filter module (1) according to claim 1, wherein
the spacing between the at least two comb-like base elements (101a, 101b) is at least 30 mm to 50 mm, preferably 40 mm, and
the spacing between the at least two comb-like fixing elements (105a, 105b) is at least 30 mm to 50 mm, preferably 40 mm.

3. The filter module (1) according to claim 1 or 2, wherein the filter material (111) is fixed for each fold over a length of at least 40 mm, preferably at least 50 mm, between one of the comb-like base elements (101a, 101b) and one of the corresponding comb-like fixing elements (105a, 105b).

4. The filter module (1) according to one of claims 1 to 3, wherein the filter material (111) is supported at the lace of each fold on at least one side by one of the comb-like base elements (101a, 101b) or by one of the comb-like fixing elements (105a, 105b).

5. The filter module (1) according to one of claims 1 to 4, wherein the fixing frame (107) has slots whose length corresponds to the spacing between the at least two comb-like base elements (101a, 101b) and whose spacing corresponds to the spacing of the fold of the filter material (111).

6. The filter module (1) according to one of claims 1 to 5, wherein by fixing the filter material (111) between the first arrangement of comb-like base elements (101a, 101b) and the second arrangement of comb-like fixing elements (105a, 105b) between two neighbouring arrangements, together with the lattice structure of the fixing frame (107), individual filter chambers (113) are formed.

7. A plant (100) for filtering dusts, comprising
- the filter module (1) according to one of claims 1 to 6,
- a housing (3) which has a receptacle for the filter module (1),
- a supply channel (5) arranged upstream of the receptacle for the filter module (1),
- a suction device (7) arranged in the housing (3), which suction device is in flow connection with the filter module (1),
- a discharge channel (9) arranged downstream of the suction device (7),
- a pressure sensor arranged between the filter module (1) and the suction device (7), and
- a switch box (13) that is electrically connected at least to the suction device (7) and the pressure sensor.

8. The plant (100) according to claim 7, which has a volume flow rate of 3,000 m³/h to 4,000 m³/h for a raw gas volume of up to 0.1 m³, wherein the system (100) is designed for a K_{St} value of up to 500 bar*m/s.

9. The plant (100) according to claim 7 or 8, further comprising
- a free space (303) arranged within the housing (3) between the filter module (1) and the suction device (7),
- a blower unit with a blower motor and a blower outlet, which is arranged in the free space (303) in a movable manner,
wherein the blower outlet is arranged at the height of the filter module (1) and the blower unit is movable parallel to the filter module (1),
- a dust-collecting device (17) arranged in the supply channel (5) below the receptacle for the filter module (1),
- a shut-off slide valve arranged between the receptacle and the dust-collecting device (17).

10. The plant (100) according to one of claims 7 to 9, further comprising a decoupling module (19) for explosion decoupling of the plant (100) from the supply channel (5), which is arranged between the receptacle for the filter module (1) and the supply channel (5).

11. The plant (100) according to one of claims 7 to 10, wherein the discharge channel (9) arranged downstream of the suction device (7) is designed as a pressure relief.

12. The plant (100) according to one of claims 7 to 11, wherein the discharge channel (9), the switch box (13) and the decoupling module (19) are integrated in the housing (3), so that the system (100) is of explosion-proof design.

13. A plant network for filtering dusts, comprising
- at least two systems (100) for filtering dusts according to one of claims 7 to 12, wherein the at least two plants (100) are arranged one above the other and are aligned with respect to one another such that the feed channels (5) are located one above the other,
- a hopper unit which receives the feed channels (5) of the at least two plants (100) and decouples them from one another in terms of flow.

14. A method for separating dusts from a gas stream, comprising the steps of
a) introducing the gas stream laden with dusts into a supply channel (5) of a plant (100) for filtering dusts according to one of Claims 7 to 11,
b) drawing the dust-laden gas stream into a filter module (1) for dusts using a suction device (7) of the system (100) according to one of the claims 1 to 6,
c) separating the dusts from the dust-laden gas stream in the filter module (1), the dusts being collected in a filter material (111) and the gas stream being discharged via a discharge duct (9) of the system (100),
d) continuously recording the pressure profile of the gas stream downstream of the filter module (1),
e) continuously measuring the flow rate in the system (100) by means of a flow sensor,
f) suspending steps a), b) and c) when the pressure falls below a predetermined pressure,
g) cleaning or exchanging the filter module (1),
h) restarting the process with step a).

## Revendications

1. Module de filtration (1) pour poussières, comprenant :
- un premier agencement d'au moins deux éléments de base en forme de peigne (101a, 101b) qui sont reçus dans un cadre de base (103),
- un deuxième agencement d'au moins deux éléments de fixation en forme de peigne (105a, 105b) qui sont reçus dans un cadre de fixation (107),
les éléments de fixation en forme de peigne (105a, 105b) étant géométriquement complémentaires des éléments de base en forme de peigne (101a, 101b),
- un dispositif de fixation (109) pour relier de manière réversible le cadre de base (103) au cadre de fixation (107), et
- un matériau filtrant (111) présentant un pliage,
le matériau filtrant (111) étant placé sur le premier agencement d'éléments de base en forme de peigne (101a, 101b) et étant fixé avec le deuxième agencement d'éléments de fixation en forme de peigne (105a, 105b),
le cadre de fixation (107) présentant une structure de grille avec des entretoises (1071) et des fentes (1073), les entretoises (1071) supportant respectivement les extrémités du pliage du matériau filtrant (111) sur un côté du gaz pur.

2. Module de filtration (1) selon la revendication 1, dans lequel
la distance entre les au moins deux éléments de base en forme de peigne (101a, 101b) est d'au moins 30 mm à 50 mm, de préférence 40 mm, et
la distance entre les au moins deux éléments de fixation en forme de peigne (105a, 25 105b) est d'au moins 30 mm à 50 mm, de préférence 40 mm.

3. Module de filtration (1) selon la revendication 1 ou 2, dans lequel le matériau filtrant (111) est fixé pour chaque pli sur une longueur d'au moins 40 mm, de préférence d'au moins 50 mm, entre l'un des éléments de base en forme de peigne (101a, 101b) et l'un des éléments de fixation en forme de peigne correspondants (105a, 105b).

4. Module de filtration (1) selon l'une quelconque des revendications 1 à 3, dans lequel le matériau filtrant (111) est supporté au sommet de chaque pli sur au moins un côté par l'un des éléments de base en forme de peigne (101a, 19, 1b) ou par l'un des éléments de fixation en forme de peigne (105a, 105b).

5. Module de filtration (1) selon l'une quelconque des revendications 1 à 4, dans lequel le cadre de fixation (107) présente des fentes dont la longueur correspond à la distance entre les au moins deux éléments de base (101a, 101b) en forme de peigne et dont la distance correspond à la distance du pliage du matériau filtrant (111).

6. Module de filtration (1) selon l'une quelconque des revendications 1 à 5, dans lequel la fixation du matériau filtrant (111) entre le premier agencement d'éléments de base en forme de peigne (101a, 101b) et le deuxième agencement d'éléments de fixation en forme de peigne (105a, 105b) entre deux agencements voisins (5), conjointement avec la structure de grille du cadre de fixation (107), permet de former des chambres de filtration individuelles (113).

7. Installation (100) pour la filtration de poussières, comprenant
- le module de filtration (1) selon l'une quelconque des revendications 1 à 6,
- un boîtier (3) présentant un logement pour le module de filtration (1),
- un canal d'amenée (5) agencé en amont du logement pour le module de filtration (1),
- un dispositif d'aspiration (7) agencé dans le boîtier (3), qui est en communication fluidique avec le module de filtration (1),
- un canal d'évacuation (9) agencé en aval du dispositif d'aspiration (7),
- un capteur de pression agencé entre le module de filtration (1) et le dispositif d'aspiration (7), et
- un coffret de commutation (13) relié électriquement au moins au dispositif d'aspiration (7) et au capteur de pression.

8. Installation (100) selon la revendication 7, qui présente un débit volumétrique de 3 000 m3/h à 4 000 m3/h pour un volume de gaz brut de jusqu'à 0,1 m3, l'installation (100) étant conçue pour une valeur Kst de jusqu'à 500 bar*m/s.

9. Installation (100) selon la revendication 7 ou 8, comprenant en outre
- un espace libre (303) agencé à l'intérieur du boîtier (3) entre le module de filtration (1) et le dispositif d'aspiration (7),
- une unité de soufflerie avec un moteur de soufflerie et une sortie de soufflerie, qui est agencée de manière déplaçable dans l'espace libre (303),
la sortie de soufflerie étant agencée au niveau du module de filtration (1) et l'unité de soufflerie étant déplaçable parallèlement au module de filtration (1),
- un dispositif de captage des poussières (17) qui est agencé en dessous du logement pour le module de filtration (1) dans le canal d'amenée (5),
- une vanne d'arrêt qui est agencée entre le logement et le dispositif de captage des poussières (17).

10. Installation (100) selon l'une quelconque des revendications 7 à 9, comprenant en outre un module de découplage (19) pour découpler l'installation (100) du canal d'amenée (5) en termes d'explosion, agencé entre le logement pour le module de filtration (1) et le canal d'amenée (5).

11. Installation (100) selon l'une quelconque des revendications 7 à 10, dans laquelle le canal d'évacuation (9) agencé en aval du dispositif d'aspiration (7) est conçu sous forme de décharge de pression.

12. Installation (100) selon l'une quelconque des revendications 7 à 11, dans laquelle le canal d'évacuation (9), le coffret de commutation (13) et le module de découplage (19) sont intégrés dans le boîtier (3), de telle sorte que l'installation (100) est conçue pour résister aux explosions.

13. Réseau d'installations pour la filtration de poussières, comprenant
- au moins deux installations (100) pour la filtration de poussières selon l'une quelconque des revendications 7 à 12,
les au moins deux installations (100) étant agencées l'une au-dessus de l'autre et étant orientées l'une par rapport à l'autre de telle sorte que les canaux d'amenée (5) sont situés l'un au-dessus de l'autre,
- une unité de trémie qui reçoit les canaux d'amenée (5) des au moins deux installations (10) et les découple l'un de l'autre en termes d'écoulement.

14. Procédé de séparation de poussières d'un flux gazeux, comprenant les étapes suivantes :
a) l'introduction du flux gazeux chargé de poussières dans un canal d'amenée (5) d'une installation (100) pour la filtration de poussières selon l'une quelconque des revendications 7 à 12,
b) l'aspiration du flux gazeux chargé de poussières par un dispositif d'aspiration (7) de l'installation (100) dans un module de filtration (1) pour les poussières selon l'une quelconque des revendications 1 à 6,
c) la séparation des poussières du flux gazeux chargé de poussières dans le module de filtration (1), les poussières étant captées dans un matériau filtrant (111) et le flux gazeux étant évacué de l'installation (100) par l'intermédiaire d'un canal d'évacuation (9),
d) la détection en continu de l'évolution de la pression du flux gazeux en aval du module de filtration (1),
e) la mesure en continu de la vitesse d'écoulement dans l'installation (100) au moyen d'un capteur d'écoulement,
f) l'arrêt des étapes a), b) et c) lors du passage en dessous d'une pression prédéterminée,
g) le nettoyage ou le remplacement du module de filtration (1),
h) la reprise du procédé par l'étape a).
